# EUROPEAN PATENT APPLICATION

(11) **EP 1 637 211 A1**
(43) Date of publication of application: **22.03.2006**
(21) Application number: 05016217.1
(22) Date of filing: 26.07.2005
(51) Int. Cl.: B01D 53/68, B01D 53/86

(54) **Exhaust gas decomposition processor and method for processing exhaust gas**

(30) Priority: 10.09.2004 JP 2004263207
(71) Applicant: Hitachi, Ltd., Tokyo 100-8280 (JP)
(72) Inventor: Sasaki, Takashi, Hitachi Ltd, Chiyoda-ku Tokyo 100-8220 (JP); Kanno, Shuuichi, Hitachi Ltd, Chiyoda-ku Tokyo 100-8220 (JP); Tamata, Shin, Hitachi, Ltd, Chiyoda-ku Tokyo 100-8220 (JP)
(74) Representative: Strehl Schübel-Hopf & Partner

(57) **Abstract**

In order to remove a lot of silicon compounds in the PFC-containing exhaust gas , which flows into a catalyst type PFC decomposition processor, with a wet removal device in the preceding stage of a reactor, using the same method as before, a lot of water has been needed. It is intended to reduce the amount of water to be used. There is provided a gas decomposition processor, having: a wet removal device for removing solid substances contained in a processed gas; a preheating device for heating the processed gas; and a reactor for decomposing the processed gas, wherein the wet removal device has a plurality of spray nozzles, the plurality of spray nozzles including a spray nozzle (3) for forming a mist in the upstream side and a spray nozzle (2) for forming a water film in the downstream side. Different spray nozzles are arranged in the wet removal device to cause a water to be sprayed to contact efficiently with a processed gas containing a silicon compound. Moreover, a silicon compound-containing mist which is produced by reacting with the water is caused not to flow through the reactor having a catalyst layer.

## Description

### FIELD OF THE INVENTION

The present invention relates to a device for efficiently detoxifying an exhaust gas, particularly a PFC gas exhausted in manufacturing semiconductors, liquid crystals or the like.

### BACKGROUND OF THE INVENTION

PFC (Perfluorocompounds) used in manufacturing semiconductors and liquid crystals is a gas that causes global-warming several thousands to several ten thousands times more than CO₂ does. In Global Conference on Global Warming (COP3), the reduction in warming-gas exhaust was determined, and the industries also determined a goal of voluntary restriction on the PFC discharge to the atmosphere. As the discharge restricting measures, the reconsideration about the process to be used, developments of the alternative gases, or the like are proceeding, however, since it takes time for the developments, a decomposition method is being introduced.

A combustion method, a medicine method, a plasma method, a pyrolysis method, or the like are known as the decomposition method. We've developed a catalyst technique having a high decomposition rate at low temperature and capable of decomposing at low cost, and have commercialized a catalyst type PFC decomposition processor. The feature of the catalyst method is that an extremely high decomposition rate is obtained at low temperature as compared with other methods. Until now, when processing the exhaust gas in the semiconductor or liquid crystal line, consideration about only the decomposition ability of the PFC contained in the exhaust gas has been practically sufficient.

However, depending on the etching conditions of semiconductors and liquid crystals, a lot of gaseous compounds, which react with solid substances or H₂O to solidify, are beginning to be contained in the etching exhaust gas. It turned out that silicon compounds in particular, if the processing thereof is insufficient, will flow into a catalyst layer to degrade the decomposition ability of PFC. Also conventionally, a wet removal such as a filling tower, a spray tower using water for removing acid gases and solid substances has been used in order to suppress the decrease in the decomposition ability of PFC, however, if there are a lot of silicon compounds, a sufficient purification rate can not be obtained in the case where there is small amount of water at the time when carrying out wet removal, and thus the silicon compounds flow into the catalyst layer.

In processing the PFC-containing exhaust gas, the inflow of the silicon compounds into the catalyst layer is affecting the durability of a catalyst. Patent document 1: JP-A-2000-042367

### BRIEF SUMMARY OF THE INVENTION

In order to remove silicon compounds in the PFC-containing exhaust gas, which flows into the catalyst type PFC decomposition processor, using the same method as before in the wet removal device in the preceding stage of a reactor, a lot of water will be required. Moreover, it is necessary to prevent the silicon from flowing into the catalyst layer.

The problem of the present invention is to cause the processed gas to contact with water efficiently, thereby reducing the amount of water to be consumed. The problem of the present invention is also to cause the water (mist) containing silicon-compounds not to flow into the reactor having the catalyst layer.

The feature of the present invention capable of solving the above-described problems is to prepare a plurality of spray nozzles in the wet removal device, and dispose a spray nozzle for forming a mist in an upstream side and a spray nozzle for forming a water film in a downstream side.

Other objects, features and advantages of the invention will become apparent from the following description of the embodiments of the invention taken in conjunction with the accompanying drawings.

### BRIEF DESCRIPTION OF THE DRAWINGS

Fig. 1 is an example of a wet removal device of the present invention.
Fig. 2 is an example of a wet removal device of the present invention.
Fig. 3 is an example of a wet removal device of the present invention.
Fig. 4 is an example of a wet removal device of the present invention.
Fig. 5 is an example of a wet removal device of the present invention.
Fig. 6 is an example of an exhaust gas processor of the present invention.
Fig. 7 is an example of an exhaust gas processor of the present invention.
Fig. 8 is an example of an exhaust gas processor of the present invention.
Fig. 9 (a) is a sectional view from a side face of a hollow cone nozzle, and Fig. 9 (b) is a sectional view from an upper face of the hollow cone nozzle.
Fig. 10 is a sectional view from a side face of a full cone nozzle.

### (DESCRIPTION OF REFERENCE NUMERALS)

1 ... Target processed-gas (PFC-containing gas containing a silicon compound),
2 ... Spray nozzle for forming a water film,
3 ... Spray nozzle for forming mist,
4 ... Tap water or the like,
5 ... Target processed-gas in which solid substances or the like have been removed (Exhaust)
6 ... Waste water,
7 ... Recycling water (Acid water)
8 ... Gas sampling port,
9 ... Porous board,
10 ... Orifice board,
11 ... Orifice board
12 ... Upper-stage (down stream) nozzle,
13 ... First demister layer,
14 ... Second demister layer,
20 ... Water
25 ... Exhaust gas
26 ... Waste water
99 ... Etching chamber
100 ... PFC gas,
102 ... Impurity removal device,
104 ... Preheating device,
105 ... Reactor,
106 ... Cooling device,
107 ... Exhaust gas cleaning tub
109 ... Exhaust facility.

### DETAILED DESCRIPTION OF THE INVENTION

As the results of various investigations using SiF₄, which is the starting material of the silicon compounds, in order to solve the problems, we've reached the following inventions.

According to an aspect of the present invention described above, an exhaust gas decomposition processor comprises: a wet removal device for removing solid substances contained in a processed gas; a preheating device for heating the processed gas; and a reactor for decomposing the processed gas, wherein the wet removal device has a plurality of spray nozzles, and the plurality of spray nozzles include a spray nozzle for forming a mist in an upstream side and a spray nozzle for forming a water film in a downstream side. In addition, if capable of forming a mist and a water film, the spray nozzle includes other means for spouting water, such as the so-called shower. Furthermore, it is preferable that the spray nozzle serve as a spray nozzle layer for forming a water film and a mist with respect to the flowing direction of the processed gas.

As the results of detailed investigations on the chemical mechanisms of silicon compounds, we've found out that although SiF₄ reacts with water easily, the reaction products turn in particles, and that since these particles are highly hydrophilic with a mist, they will flow out of the spray tower together with the mist from the spray tower, and consequently, the silicon compounds will flow out of the wet removal device. At present, it is anticipated that SiF₄ reacts with H₂O to produce several kinds of compounds. The followings are the reaction formulas of the principal products.

SiF₄+2H₂O → SiO₂+4HF

SiF₄+4H₂O → Si (OH)₄+4HF

SiF₄+2HF → H₂SiF₆

The present invention is capable of removing these compounds highly efficiently.

As described above, most of the gaseous silicon compounds such as SiF₄ are removed in the wet removal device.

However, the produced silicon compounds of particles are hard to remove with the usual demister, and the outflow to the subsequent stage will increase with time, thereby preventing the ability of the PFC decomposition processor.

According to the configuration of the present invention described above, in the upstream side of the water film, a high density water mist exists to improve the reactivity between the exhaust gas and water. Moreover, the water, in which the solid substances of reaction products, reaction gases, and the like are dissolved, and the particles of the reaction products are captured by the water film, thereby preventing them from flowing out to the down stream.

As an example of the above-described spray nozzle for forming a water film, a hollow cone nozzle for forming a cone shaped liquid film or a temple bell-shaped liquid film, and a flat nozzle for forming a sector shaped liquid film are listed. On the other hand, as the above-described spray nozzle for forming a mist, a full cone nozzle or the like is listed.

One or more combinations of the spray nozzle for forming a mist and the spray nozzle for forming a water film may be sufficient in order to solve the problems of the present invention, and a plurality of respective spray nozzles may be disposed, taking into consideration the amount of gas to be processed, the reactivity, or the like. Moreover, a configuration of repeating a combination of the spray nozzle for forming a mist and the spray nozzle for forming a water film may be also made. In addition, a configuration in which the spray nozzle to be disposed in the downmost stream is the one for forming a water film is preferable.

Other invention capable of solving the above-described problems includes a spray nozzle that sprays the water containing the processed compounds or the like as to be in contact with the exhaust gas, and a spray nozzle for spraying the water that does not contain the processed compounds, such as a tap water. In this case, for the spray nozzle disposed in the downmost stream, the latter water that does not contain the processed compounds is desirable. Moreover, it is also preferable to dispose the spray nozzle for forming a water film in the subsequent stage of the spray nozzle for spraying the water containing the processed compounds, or the like

Moreover, in the silicon compound removal section, the nozzle lastly to contact with the processed-gas stream is the nozzle for forming a water film.

A porous board can be inserted in the passage of the gas to improve the reaction efficiency. Moreover, an orifice board can be disposed to prevent the water mist from flowing out to the subsequent stage.

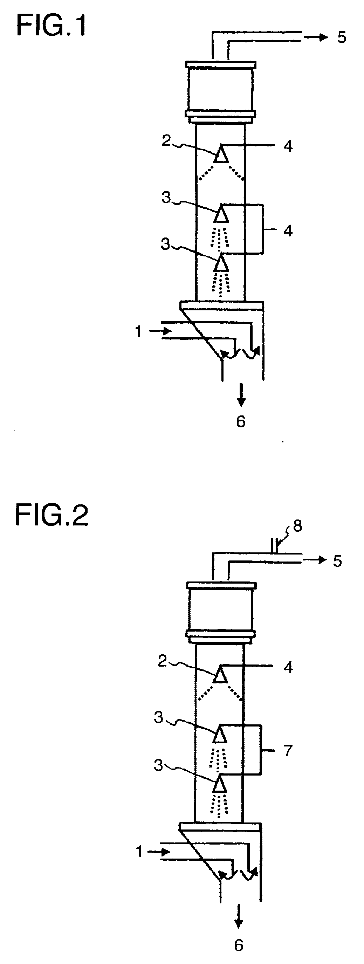

The device configuration of the present invention is shown in Fig. 1 to Fig. 5.

An example of the present invention will be described with reference to Fig. 1. A wet removal device of an exhaust-gas processor shown in Fig. 1 is a device for removing silicon compounds from the processed gas containing the silicon compounds and perfluorocompounds (PFC), and the exhaust gas decomposition processor comprises: the wet removal device: a preheating device that heats the processed gas that has passed through the wet removal device to a predetermined reaction temperature; a reactor for decomposing the above PFC contained in the heated processed-gas; and a cooling device for cooling the decomposed gas, which is exhausted from the reactor. The wet removal device is a spray tower having a plurality of different spray nozzles. Note that, together with the cooling device or in place of the cooling device, the exhaust gas processor for removing an acid gas from the decomposed gas, which is exhausted from the reactor, can be added to the configuration.

Fig. 1 shows an example in which different types of spray nozzles are used in three stages. The spray nozzles are a spray nozzle 2 for forming a water film, and a spray nozzle 3 for spraying a mist. The nozzle to lastly contact with the processed gas serves as the spray nozzle for forming a water film with respect to the flow of the processed gas. The above-described nozzle for forming a water film is a hollow cone nozzle or the like, and the spray nozzle for producing a mist is a full cone nozzle or the like

Although the above-described reactor may be a combustion reactor, a plasma reactor or a catalytic reactor, the catalytic reactor is highly effective.

A PFC-containing gas that contains silicon compounds (hereinafter, referred to as a processed gas) 1 flows in from a lower portion of the spray tower (the upstream side) and is exhausted (5) from the upper stage (the downstream side). The lower portion (the upstream side) nozzle 3 is a full cone nozzle, and the uppermost stage (the downstream side) nozzle 2 is a hollow cone nozzle. The full cone and hollow cone nozzles differ in the form of spraying water 4, and while the full cone sprays water droplets within a predetermined range almost uniformly, the hollow cone sprays water droplets so as to form a water film (like an umbrella) with respect to the flowing direction of the gas. A region with a high concentration mist can be formed using the full cone in the upstream side, and it is possible to prevent the processed gas accompanying the silicon compounds from flowing out without contacting with the sprayed water by using the hollow cone in the downstream side. Moreover, the mist containing the processed compounds is prevented from flowing to the downstream by means of the hollow cone. The number of full cone and hollow cone nozzles, the amount of sprayed water or the like may be increased or decreased depending on the amount of gas or the amount of mist. The sprayed water 4 is exhausted as the waste water 6 from the lower portion of the spray tower.

In addition, if only a plurality of nozzles for forming a water film are prepared, the contact time between the gas and the liquid may be short depending on the amount of silicon compounds to be processed, and thus the efficient removal may not be possible. Moreover, if only a plurality of nozzles for spraying a mist are prepared, the processed compound that adherers to and is dissolves into the mist as described above may flow into the subsequent stage. It is therefore necessary to make the device combining these as described above.

It is preferable that the spraying direction of the spray nozzle be set as to face to the flow of the processed gas. Specifically, the spray angle of the water film of the spray nozzle for forming a water film is set to 50-140 degrees, for example.

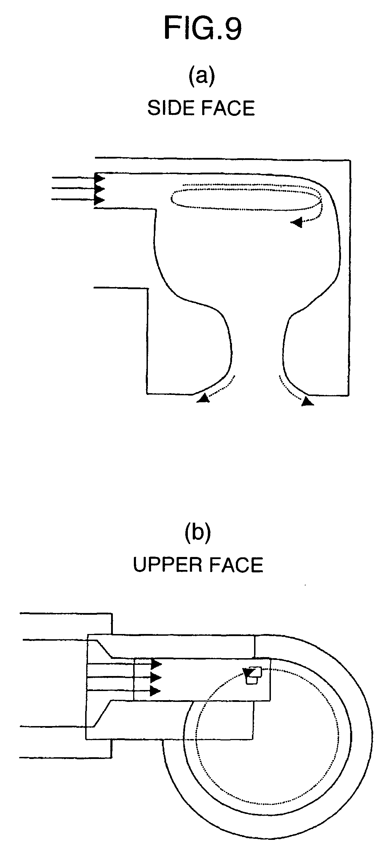

Fig. 9 shows an example of the hollow cone nozzle for forming a water film. Fig. 9 (a) is a sectional view of the hollow cone nozzle seen from the side face, and Fig. 9 (b) is a sectional view of the hollow cone nozzle seen from the upper face. The water that has flowed in will flow as to circulate inside the nozzle, and form a temple bell-shaped liquid film, the inside of which is a cavity like a swirl, and thus the spray pattern becomes ring-shaped.

Moreover, Fig. 10 shows an example of a full cone nozzle for forming a mist (a sectional view of the full cone nozzle seen from the side face). The water that has flowed in will flow out, a part thereof going around and a part thereof going straight by means of a vane. With such a configuration, the spray region becomes wide and uniform, and thus clogging is difficult to occur.

Fig. 2 is an example that the wet removal device is a spray tower having a plurality of spray nozzles, the spray tower including a spray nozzle for spraying a water containing HF, and a spray nozzle for spraying the water that does not contain HF. In this example, the nozzle 3 is caused to recycle acid water 7. Silicon compounds have extremely high reactivity and will react easily even in an acid waste water of pH=1-2. However, by spraying a tap water or the like, not an acid water, on the downmost-stream nozzle (in the uppermost stage), it is possible to reduce the generation of acid mist in the downmost-stream nozzle and the outflow to the back wash. As the acid water, it is possible to recycle the acid waste water which is caused to absorb HF in the PFC decomposition processor, or use the waste water from the waste water 6, for example. By circulating the water used inside the device in this manner, the water consumption can be reduced. Moreover, in this example, a gas sampling port 8 for measuring the gaseous composition is provided at the exit of the spray tower, which allows for the exact measurement to be made without influence from HF.

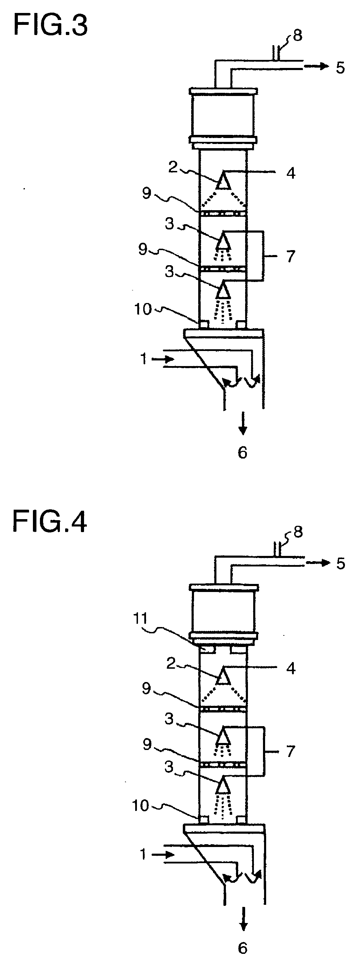

Fig. 3 is an example in which a porous board is disposed under the nozzle. In this example, a porous board 9 is dispose in the upstream side of each nozzle. By setting the opening ratio of these porous boards to 25-70%, the processed gas will contact with the sprayed water efficiently and the removal ability of the silicon compounds can be improved. It is desirable that the porous board be disposed in a place where the spraying area of the spray becomes the maximum. If it is disposed before the spraying area becomes the maximum, a portion in which the spray water does not contact with the processed gas will occur, and the processed gas will possibly pass therethrough. If the opening ratio is low, the contact efficiency will decrease, and if it is too high, the pressure loss will increase, therefore, the opening ratio of 20-70% is desirable. The opening ratio of 25-45% is preferable in particular. Depending on the type of nozzle, an orifice board 10 may be used to improve the contact efficiency between the processed gas and the water.

Fig. 4 is an example of disposing the orifice board. As shown in the view, an orifice board 11 is disposed in the upper layer (in the downstream side) of the uppermost spray nozzle disposed in the uppermost stage. The spray nozzle in the uppermost portion described in Fig. 4 is a hollow cone nozzle. The orifice board refers to a disk with an open hole, the disk being inserted in the midway of the conduit to squeeze the passage, thereby detecting the varied pressure and measuring the flow rate (Koujien of Iwanami Bookstore), however, it just needs to be a board for squeezing the passage in the above invention.

If the hollow cone nozzle is used, it is possible to remove the mist generated at the nozzle in the upstream side, however it is not possible to remove the mist generated at the time when the water sprayed from the hollow cone nozzle comes in contact with the wall surface. Since the mist generation occurs mostly at the time when the sprayed water comes in contact with the wall surface of the spray tower, the mist will contact with the wall surface in the orifice board in the down stream of the nozzle, and it will not flow out. As a result, the outflow of the mist can be suppressed. In addition, although the orifice board is used in Fig. 4, the inside diameter of the conduit may be made small using a conduit with a small diameter or the like. The same advantage can be obtained by making the inside diameter small

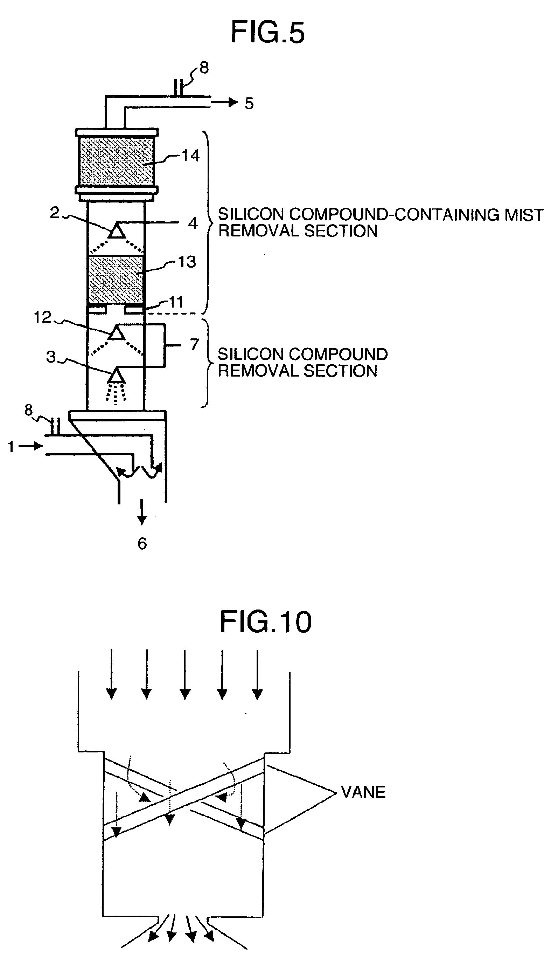

Fig. 5 is an example of a wet removal device including a silicon compound removal section having a spray nozzle, and a silicon-containing mist removal section in the upper stage thereof (at the back-wash side) .

In the silicon compound removal section, the silicon compounds in the processed gas is removed with one spray nozzle or a plurality of, single or different types of spray nozzles. At this time, it is desirable to use a spray nozzle with a type that forms a water film with respect to the processed gas, as the uppermost-stage nozzle 12.

According to this example, the silicon compound removal section has a plurality of different spray nozzles, and in this example, one spray nozzle 2 for forming a water film, and one spray nozzle 3 for producing a mist are prepared, respectively. In addition, it is possible to make the configuration of the silicon compound removal section the same component configuration as those of other examples.

Moreover, the silicon-containing mist removal section includes, in that order for the processed gas to pass through: a first demister layer of a silicon compound-containing mist composed of a hydrogen fluoride-resistant material; a spray nozzle layer which removes, from the processed gas, the silicon compound-containing mist which has passed through the first demister layer; and a second demister layer for removing the water mist further. In the silicon-containing mist removal section, the orifice board 11 is disposed above the uppermost-stage nozzle of the silicon compound removal section to reduce the amount of outflow of the generated mist. The silicon-containing mist in the processed gas which has passed through the orifice board will pass through the first demister layer 13, and a part thereof will be removed.

As for the demister to be used, a general one can be used, however, since it contains HF acid gas, the one made of a corrosion resistant material is desirable. For example, plastic materials, such as PTFE, PFA, PP, PE, and vinyl chloride, are desirable. Moreover, as the demister, a filler is preferable. A filter in place of the filler may be disposed in the midway of the conduit, however, if the aperture of the filter is too small, solid substances will accumulate on the surface of the filter and the pressure loss will increase. Accordingly, the throughput will decrease, and the frequency of maintenance will increase.

As the shape thereof, a demister, such as a pole ring can be used, however, a corrosion-resistant demister in a mesh shape exhibits high removal ability. The mist which can not be removed in the first demister layer will be removed out of the processed gas by the spray nozzle 2 disposed above the first demister layer. As to the nozzle to be used, the one, in which the processed gas surely contacts with the sprayed water, such as the hollow cone type is desirable. Then, the mist containing residual silicon compounds and a simple water mist that are lastly contained in the processed gas are removed by the second demister layer 14. The demister used in the second demister layer may be the one used in the first demister layer. In the silicon compound removal section, a different spray nozzle may be used.

Although various device configurations are shown in Fig. 1 to Fig. 5, these are just examples, and the configuration components of each device may be combined for use. As the operating conditions in case of using the spray tower, the relationship, L/G (L/m³), between the amount of spray water and the amount of processed gas (processed gas) can be used in the range of 5 - 100 L/m³. Moreover, the linear velocity can be used in the range of 10 - 30 m/sec.

The target gas of the present invention is PFC in particular, like the examples of the present invention described above, and the inorganic and organic compounds containing F. The constituents of the compounds refer to fluorine, carbon, hydrogen, oxygen, sulfur, and nitrogen, and specifically: the compounds composed of carbon and fluorine; the compounds composed of carbon, hydrogen, and fluorine; the compounds composed of carbon, fluorine, hydrogen, and oxygen; the compounds composed of carbon, fluorine, and oxygen; the compounds composed of sulfur and fluorine; the compounds composed of sulfur, fluorine, and oxygen; and the compounds composed of nitrogen and fluorine; and the compounds composed of nitrogen, fluorine and oxygen. As examples of other compounds which possibly coexist, CF₄, CHF₃, CH₂F₂, CH₃F, C₂F₆, C₂HF₅, C₂H₂F₄, C₂H₃F₃, C₂H₄F₂, C₂H₅F, C₃F₈, CH₃OCF₂CF₃, C₄F₈, C₅F₈, SF₆, SO₂F₂, NF₃, C₄F₆, and etc. are listed.

The impurities that flow in, other than the silicon compounds, differ depending on the substrates to be etched and the objects to be cleaned, however include compounds of Ti, Ta, Si, A1, Cr, Fe, Ni, W, S, and etc. These can be also removed in the wet removal device.

The present invention can be used in the devices which decompose the processed object-gas with a combustion method, a plasma method, and a catalyst method. The catalyst used in the catalyst method may be a general catalyst used for the hydrolysis, oxidative decomposition and the like. For example, the one used for the PFC decomposition is the catalyst that contains Al. More preferably, catalysts which contain Al and at least one constituent among Zn, Ni, Ti, Fe, Sn, Co, Zr, Ce, Si, W, Pt, and Pd can be used. These constituents exist in the form of oxides, metal, and a compound oxide. The catalyst which contains Ni, Zn, Ti, W, Co, and Zr in Al₂O₃, in particular, has high decomposition ability. As an example, there is a catalyst including an oxide of Ni and A1. Although this catalyst contains Al and Ni, these are contained in the form of NiO and NiAl₂O₄. Although a part of Al does not exhibit a clear diffraction pattern when conducting an X-ray analysis of the catalyst, this is considered because it is contained in an amorphous shape having a poor crystallinity. Furthermore, a catalyst, wherein 1 - 10 wt% WO₃, as a metal, of NiO/Al₂O₃ catalyst, preferably 1 - 5 wt% WO₃, is added to this catalyst, exhibits a further higher ability.

The typical reactions of the decomposition reaction of PFC include the followings:

CF₄+2H₂O → CO₂+4HF (Formula 1)

C₂F₆+3H₂O → CO+CO₂+6HF (Formula 2)

CHF₃+H₂O → CO+3HF (Formula 3)

SF₆+3H₂O → SO₃+6HF (Formula 4)

NF₃+3/2H₂O → NO+1/2O₂+3HF (Formula 5)

Although the reactions of (Formula 2) and (Formula 3) produce CO, CO can be turned in CO₂, if oxygen exists. Moreover, a CO oxidation catalyst may be disposed in the back wash of the reactor, or may be used in the same reaction tube. In case of the catalyst type, it may be disposed in the back wash of the PFC decomposition catalyst in the reactor.

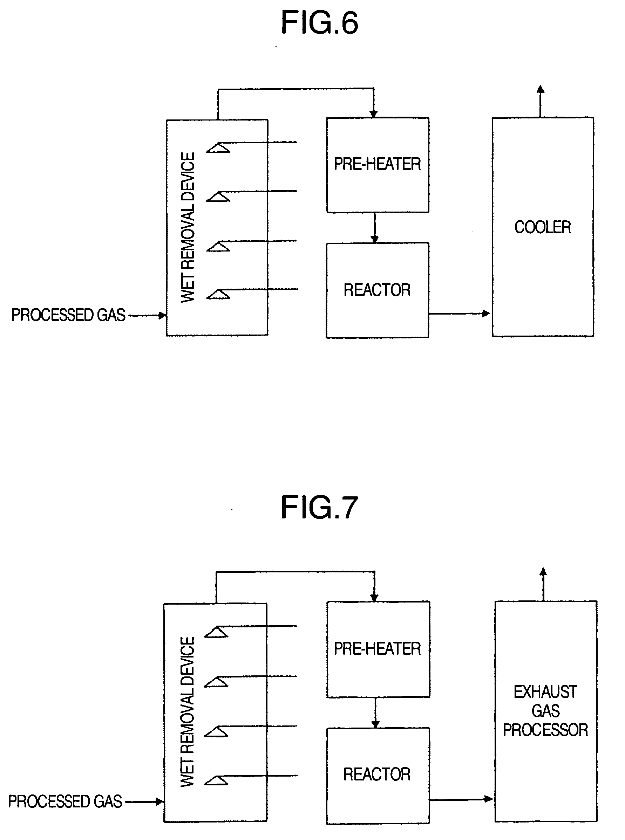

The device configurations of the PFC decomposition processor of the present invention are shown in Fig. 6 and Fig. 7. A processed gas that contains silicon compounds and PFC is sent to the wet removal device, which is a spray tower having a plurality of different spray nozzles and in which the silicon compounds and other solid substances are removed. Then, the processed gas is sent to a preheating device, in which the temperature is increased to a predetermined reaction temperature capable of decomposing the PFC, and the PFC is decomposed in the reactor. The decomposed gas produced in the PFC decomposition is cooled to a predetermined temperature or the acid portion in the decomposed gas is removed in the cooling device, and thereafter it is exhausted. That is, in contrast to Fig. 6, the exhaust gas decomposition processor may be installed in place of the cooling device as shown in Fig. 7, or the exhaust gas decomposition processor may be installed in the preceding stage or in the subsequent stage of the cooling device.

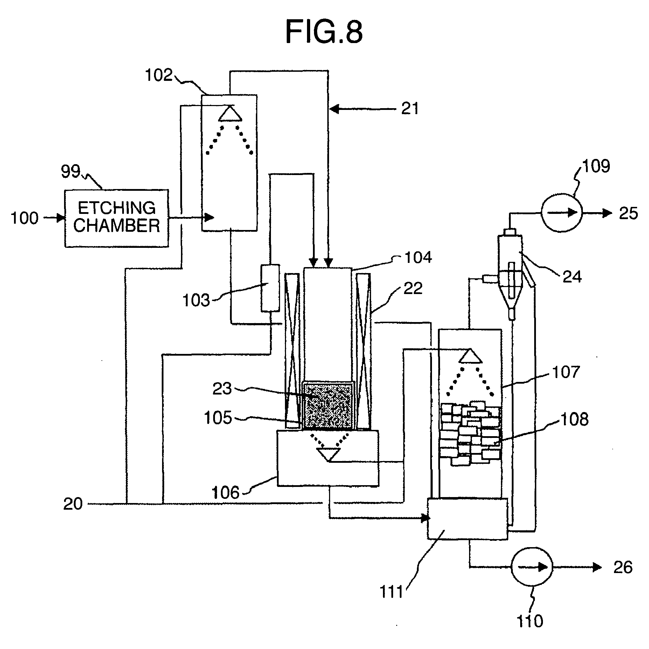

Fig. 8 shows an example of the catalyst type PFC processor in the semiconductor manufacturing process and liquid crystal manufacturing process, to which the PFC decomposition processor of the present invention is applied. A PFC gas 100 is introduced into an etching apparatus 99 in a semiconductor or a liquid crystal plant. Other gases supplied along with the PFC to the etching apparatus vary depending on the etching conditions or the like. With respect to the exhaust gas from the etching apparatus, silicon compounds, such as SiF₄, SiO₂, HF contained in the exhaust gas are removed in an impurity removal device 102. Although depending on the etching conditions, constituents are contained that react with other solid substances and water to solidify, they are also removed in the impurity removal device 102. For the impurity removal device 102, the spray tower configured like the ones shown in Fig. 1 to Fig. 5 or the like can be used. Air or oxygen 21 is added to the gas that has passed through the spray tower, and then this processed gas is introduced into a preheating device 104. Water or steam required for the reaction is directly introduced into the preheating device. If the water is directly introduced, it is evaporated in a preheating tub. Although it is desirable that the water be a pure water, if a city water 20, such as a tap water is used, it is caused to pass through an ion exchange resin 103 or the like, thereby removing metal constituents which will deposit as a scale, and thereafter it is for use. A heating device 222 of the preheating device heats the temperature of the processed-gas arbitrarily in the range from 400 to 900°C. The heated processed-gas is hydrolyzed in a reactor 105 which is filled with a catalyst 23 containing alumina, for example. For example, CF₄ is decomposed into CO₂ and HF. The heating device of the reactor is kept warm or heated so that the temperature of the processed-gas may not drop from a preset temperature. Since the decomposition-produced gas that has passed through the catalyst layer is at high temperature, the temperature is lowered in a cooling device 106 capable of spraying water or an acid water. In addition, as the cooling method of the processed gas, general methods such as a water-cooling or a gas-cooling, or a heat exchanger, or the like can be used. Subsequently, an acid exhaust gas processing tub 107 may be installed as required. Fig. 8 is an example of installing an exhaust gas scrubber. Water is sprayed, and by means of a filler 108, the improvement in the contact efficiency between the exhaust gas and the sprayed water is made, and the mist removal is carried out. The exhaust gas after having passed through a cooling room is discharged as an exhaust gas 25 outside the system by means of an exhaust facility 109 such as a blower or an ejector. Moreover, the water that has absorbed the acid gas is also discharged to a waste-water line in the plant as a wastewater 26 by means of a waste-water facility 110. The water used in the cooling device 106 and the impurity removal device 102 may be collected once to a waste water tank 111 to drain. Moreover, by means of a drain pump 110, or by installing other recycling pumps in the preceding stage or the subsequent stage of the drain pump, the acid waste water may be recycled to the impurity removal device 102, the cooling device 106, and the exhaust gas cleaning tub 107. If mist, in particular an acid mist is contained in the gas that has passed through the exhaust gas cleaning tub 107, a mist removal device such as a cyclone 24 may be installed.

### Example 1

This example is an example in the case where different spray nozzles are combined. A comparison with a single nozzle is shown.

Spray-type wet removal devices with the tower diameters of 85φ and 125φ and a height of 600 mm are used. SiF₄ is used as the silicon compound. SiF₄ is added to N₂ of 200 L/min so that the Si concentration is set to 2000 mg/m³.

The nozzles are made in three stages, the nozzles being of a full cone, a full cone, and a hollow cone type from the gas inflow side, and the amount of Si in the gas at the exit of the spray tower is measured. HF-containing water of pH=1-2 is supplied to the full cone, a tap water is supplied to the hollow cone, and the amount of water sprayed from two full cone nozzles is set to 5.39 L/min, and the amount of water from the hollow cone is set to 1.55 L/min. L/G is set to 35 (L/m³) In addition, in order to investigate the advantage of the hollow cone nozzle, a comparison is made with the case where all of them are full cone nozzles. Also in this case, a tap water is supplied to the nozzle in the uppermost stage, and the water containing HF is supplied to the rest of the nozzles. L/G at this time is set to 40 (L/m³).

In the case where the nozzle in the uppermost stage is the hollow cone, the amounts of Si having flowed out from the spray towers of 85φ and 125φ are 1.6 and 0.8 mg/m³, respectively. On the other hand, in the case where all of them are full cones, they are 4.1 and 2.5 mg/m³, respectively. Namely, the amount of Si is reduced by (1-1.6/4.1) x100= 61% in the spray tower of 85φ, and reduced by 68% in the spray tower of 125φ, and the advantage in combining the hollow cone nozzle with the full cone nozzle has been confirmed. The results are summarized in Table 1.

**Table 1**

| No | Diameter of spray tower (mm ID) | Type of nozzle | L/G (L/m³) | Amount of Si in the gas at the exit |
|---|---|---|---|---|
| 1 | 85 | Full cone + hollow cone | 35 | 1.6 |
| 2 | 85 | Full cone | 40 | 4.1 |
| 3 | 125 | Full cone + hollow cone | 35 | 0.8 |
| 4 | 125 | Full cone | 40 | 2.5 |

### Example 2

This example is an example of recycling the HF-containing acid water. The removal ability is compared with the case where a tap water that does not contain HF is used partly.

Spray-type wet removal devices with the tower diameters of 85φ and 125φ and a height of 600mm are used. SiF₄ is used as the silicon compound. SiF₄ is added to N₂ of 200 L/min so that the Si concentration is set to 2000 mg/m³. For the spray tower of 85φ, the nozzles are made in two stages. For the spray tower of 125φ, the nozzles are made in three stages.

All of the nozzles are the full cones, and the amount of Si in the gas at the exit of the spray tower is measured. In the spray tower of 85φ, the amount of water in the case where HF-containing water of pH=1-2 is supplied is 5.64 L/min, and in the case where a tap water + HF-containing water is supplied, it is a total of 5.20 L/min, with the tap water of 2.38 L/min and the HF-containing water of 2.82 L/min. The L/G are 28 and 26 (L/m³), respectively. In the spray tower of 125φ, the amount of water in the case where HF-containing water of pH=1-2 is supplied is 15.57 L/min, and in the case where a tap water + HF-containing water is supplied, it is a total of 14.62 L/min, with the tap water of 4.11 L/min and the HF-containing water of 10.50 L/min. The L/G are 79 and 73 (L/m³), respectively.

In the spray tower of 85φ, the amounts of Si in the gas at the exit in the cases where only HF-containing water and a tap water + HF-containing water are sprayed are 8.4 and 7.2 mg/m³, respectively. In the spray tower of 125φ, the amounts of Si in the gas at the exit in the cases where only HF-containing water and a tap water + HF-containing water are sprayed are 0.5 and 0.6 mg/m³, respectively. Namely, an advantage has been confirmed that the amount of Si can be removed sufficiently even if the HF-containing water is used. The results are summarized in Table 2.

**Table 2**

| No No | Diameter of spray tower (mm ID) | Type of Water | L/G (L/m³) | Amount of Si in Amount of Si in the gas at the exit |
|---|---|---|---|---|
| 1 | 85 | HF-containing water only | 28 | 8.4 |
| 2 | 85 | HF-containing water + tap water | 26 | 7.2 |
| 3 | 125 | HF-containing water only | 79 | 0.5 |
| 4 | 125 | HF-containing water + tap water | 73 | 0.6 |

### Example 3

This example is an example showing the advantage of the porous board.

A spray-type wet removal device with the tower diameter of 125φ, and a height of 600 mm is used. SiF₄ is used as the silicon compound. SiF₄ is added to N₂ of 200 L/min so that the Si concentration is set to 2000 mg/m³. The nozzles are made in three stages, the nozzle in the uppermost stage being a hollow cone, and the remaining ones being full cones.

As the porous board, the one with a number of holes of 10φ being opened and the opening ratio of 37% is disposed in between the nozzles in the uppermost stage and the second stage, and the one with a number of holes of 18φ being opened and the opening ratio of 41% is disposed in between the nozzles in the second stage and the downmost stage. The tap water supplied to the nozzle in the uppermost stage is 1.30 L/min, and the HF-containing water supplied to the nozzles in the second stage and the downmost stage is 10.32 L/min in total. L/G is 58 (L/m³). Under these conditions, the total amount of Si that has passed through the spray tower is measured. The total amount of Si is a sum of the amount of Si in the gas at the exit of the spray tower, and the amount of Si in the solid substances adhered to the exit conduit of the spray tower.

The total amount of Si in the case where the porous board is disposed is 25.14 mg/m³, which has been reduced by 18% as compared with the total amount of Si of 30.65 mg/m³ in the case where the porous board is not disposed. The advantage of the porous board has been thus confirmed. The results are summarized in Table 3.

**Table 3**

| No No | Diameter of spray tower (mm ID) | Porus board | L/G (L/m³) | Amount of Si that has passed through spray tower |
|---|---|---|---|---|
| 1 | 125 | Yes | 58 | 25.14 |
| 2 | 125 | No | 58 | 30.65 |

### Example 4

This example is an example showing an advantage of the orifice board.

A spray-type wet removal device with the tower diameter of 125φ, and a height of 600 mm is used. SiF₄ is used as the silicon compound. SiF₄ is added to N₂ of 200 L/min so that the Si concentration is set to 2000 mg/m³. The nozzles are made in three stages, the nozzle in the uppermost stage being a hollow cone, and the remaining ones being full cones.

In the position of 4.5 cm above the uppermost stage nozzle, an orifice board of 122φ with a hole of 60φ being opened in the center thereof is disposed as the orifice board. The tap water supplied to the nozzle in the uppermost stage is 1.30 L/min, and the HF-containing water supplied to the nozzles in the second stage and the downmost stage is 10.32 L/min in total. L/G is 58 L/m³. Under these conditions, the total amount of Si that has passed through the spray tower is measured. The total amount of Si is a sum of the amount of Si in the gas at the exit of the spray tower, and the amount of Si in the solid substances adhered to the exit conduit of the spray tower.

The total amount of Si in the case where the porous board is disposed is 22.30 mg/m³, which has been reduced by 27% as compared with the total amount of Si of 30.65 mg/m³ in the case where the porous board is not disposed. The advantage of the porous board has been thus confirmed. The results are summarized in Table 4.

**Table 4**

| No No No | Diameter of spray tower (mm ID) | Orifice board | L/G (L/m³) | Amount of Si that has passed through spray tower |
|---|---|---|---|---|
| 1 | 125 | Yes | 58 | 22.30 |
| 2 | 125 | No | 58 | 30.65 |

### Example 5

This example is an example showing the advantage of the silicon compound-containing mist removal section.

A spray-type wet removal device with the tower diameter of 125φ and a height of 600 mm is used. SiF₄ is used as the silicon compound. SiF₄ is added to N₂ of 200 L/min so that the Si concentration is set to 2000 mg/m³. The nozzles are made in three stages, the nozzle in the uppermost stage being a hollow cone, and the other ones being full cones. The orifice board used in the embodiment 4 is disposed above the uppermost-stage nozzle, and a demister layer with the layer height of 268 mm is prepared thereabove. The demister used consists of a pole ring made of PP and a wire mesh.

The total amount of Si in the case where the orifice board and the demister layer are disposed is 8-16 mg/m³, which has been reduced significantly as compared with the total amount of Si of 31 mg/m³ in the case where they are not disposed. The advantage of the mist removal section has been thus confirmed. The results are summarized in Table 5.

**Table 5**

| No | Diameter of spray tower (mm ID) (mm ID) | Silicon compound-containing mist removal section | L/G (L/m³) | Amount of Si that has passed through spray tower |
|---|---|---|---|---|
| 1 1 | 125 125 | Orifice board + Wire mesh | 58 | 8.06 |
| 2 | 125 | Orifice board + Pole ring | 58 | 15.43 |
| 3 | 125 | No | 58 | 30.65 |

### Example 6

This example is an example showing the advantage of the silicon compound-containing mist removal section.

A spray-type wet removal device with the tower diameter of 125φ and a height of 600 mm is used. SiF₄ is used as the silicon compound. SiF₄ is added to N₂ of 200 L/min so that the Si concentration is set to 2000 mg/m³. The nozzles are made in three stages, the uppermost stage nozzle being a full cone or a hollow cone, the second stage nozzle being the hollow cone, and the downmost stage one being the full cone. In between the uppermost stage nozzle and the second stage nozzle, the demister and the orifice board used in the example 4 are disposed, from the top. As the demister, a wire mesh is used. Furthermore, the wire mesh demister is also disposed above the uppermost stage nozzle.

A total amount of Si in the case where the hollow cone is disposed as the uppermost stage nozzle is 3.61 mg/m³, and the total amount of Si in the case where the full cone is used is 5.64 mg/m³, which has been reduced further as compared with 8.06 mg/m³ of No.1 in Table 5 of the embodiment 5 The advantage of the silicon compound-containing mist removal section, in which the hollow cone nozzles are used in two stages and the demister layer is also divided, has been confirmed. The results are summarized in Table 6.

**Table 6**

| No No | Diameter of spray tower (mm ID) | Silicon compound- containing mist removal mist removal section | L/G (L/m³) | Amount of Si that has passed through spray through spray tower |
|---|---|---|---|---|
| 1 | 125 | Two stages of hollow cone nozzle divided demister | 58 | 3.61 |
| 2 | 125 | One stage of hollow cone nozzle divided demister | 58 | 5.64 |

### Example 7

This example is an example of carrying out the experiments using a large-scale device. The flow rate of PFC-containing gas which contains a silicon compound of 2000 mg/m³, and 0.5 vol% CF₄ is 200 L/min. This gas is introduced into the wet removal device, and an air of 20 L/min is added to the PFC-containing gas that has passed through the wet removal device, which gas is then introduced into the preheating device. Reaction water is introduced into the preheating device at 20 ml/min, and is evaporated in the water evaporator in the preheating device. Even after having been carrying out the CF₄ decomposition reaction for three months, the decomposition rate of 95% or more is exhibited, and the decrease in the decomposition-rate due to the silicon compound has not occurred.

### INDUSTRIAL APPLICABILITY

Silicon compounds in the exhaust gases containing PFC from the plants of semiconductors or liquid crystals can be removed highly efficiently.

### ADVANTAGES OF THE INVENTION

The PFC decomposition processor of the present invention is capable of removing a larger amount of silicon compounds than before with a smaller amount of water than before. Moreover, since the inflow of the silicon compounds into the reactor is suppressed, a high PFC decomposition rate can be secured. Moreover, the frequency of maintenance will be reduced and the running cost can be also reduced.

## Claims

1. An exhaust gas decomposition processor, comprising:
a wet removal device for removing solid substances contained in a processed gas;
a preheating device for heating the processed gas; and
a reactor for decomposing the processed gas,
wherein the wet removal device has a plurality of spray nozzles and the plurality of spray nozzles include a spray nozzle for forming a mist in an upstream side and a spray nozzle for forming a water film in a downstream side.

2. The exhaust gas decomposition processor according to claim 1, wherein the exhaust gas decomposition processor has either or both of a cooling device for cooling the decomposed processed gas in the downstream side of the reactor, and an exhaust gas processor for removing an acid gas from the decomposed processed gas.

3. The exhaust gas decomposition processor according to claim 1, wherein the processed gas contains a perfluorocompound, and the solid substance contains a silicon compound.

4. An exhaust gas decomposition processor, comprising:
a wet removal device for removing solid substances contained in a processed gas;
a preheating device for heating the processed gas; and
a reactor for decomposing the processed gas,
wherein the wet removal device has a plurality of spray nozzles, the plurality of spray nozzles include a spray nozzle for spraying a water containing HF and a spray nozzle for spraying a water containing no HF.

5. The exhaust gas decomposition processor according to claim 1 or 4, wherein the gas decomposition processor has a porous board in an upstream side of at least one spray nozzle among the plurality of spray nozzles.

6. The exhaust gas decomposition processor according to claim 1, wherein the gas decomposition processor has an orifice board for narrowing a passage in a downstream side of at least one spray nozzle among the plurality of spray nozzles.

7. An exhaust gas decomposition processor, comprising:
a wet removal device for removing a silicon compound contained in a processed gas;
a preheating device for heating the processed gas; and
a reactor for decomposing the processed gas,
wherein the wet removal device has a silicon compound removal section having a plurality of spray nozzles, and a silicon-containing mist removal section provided in a down stream of the silicon compound removal section.

8. The exhaust gas decomposition processor according to claim 7, wherein in the silicon-containing mist removal section, a first demister layer composed of a hydrogen fluoride resistant material, a spray nozzle layer, and a second demister layer for removing a water mist are disposed in that order from an upstream side.

9. The exhaust gas decomposition processor according to claim 8, wherein the spray nozzle disposed in the downmost stream of the spray nozzle layer is a spray nozzle for forming a water film.

10. The exhaust gas decomposition processor according to any one of claims 7 to 9, wherein the spray nozzle disposed in the downmost stream among the plurality of spray nozzles provided in the silicon compound removal section is a spray nozzle for forming a water film.

11. The exhaust gas decomposition processor according to claim 9, wherein the spray nozzle for forming a water film is a spray nozzle for forming a temple bell-shaped liquid film.

12. The exhaust gas decomposition processor according to any one of claim 1, 4 and 7, wherein in the reactor, a catalyst for decomposing the processed gas is built in.

13. A method for processing a processed gas containing a constituent which solidifies by a reaction with a moisture or a particle comprising the steps of:
causing the processed gas to pass through a mist atmosphere, and thereafter to pass through a water film.
